# EUROPEAN PATENT SPECIFICATION

(11) **EP 2 375 889 B1**
(45) Date of publication and mention of the grant of the patent: **08.03.2017**
(21) Application number: 08876473.3
(22) Date of filing: 21.11.2008
(51) Int. Cl.: A01K 5/02, A01K 11/00, A01K 29/00

(54) **FEEDING SYSTEM AND PROCESS FOR BEHAVIORAL MODIFICATION OF ANIMALS**
FÜTTERUNGSSYSTEM UND VERFAHREN ZUR VERÄNDERUNG DES VERHALTENS VON TIEREN
PROCESSUS ET SYSTÈME D'ALIMENTATION POUR MODIFICATION DU COMPORTEMENT DES ANIMAUX

(43) Date of publication of application: 19.10.2011
(73) Proprietor: Hill's Pet Nutrition, Inc., Topeka, KS 66603 (US)
(72) Inventor: STADLER, James P., Silver Lake KS 66539 (US); TOLL, Philip W., Valley Falls KS 66088 (US)
(74) Representative: Daniels, Jeffrey Nicholas
(86) International application number: PCT/US2008/084312
(87) International publication number: WO 2010/059161

(56) References cited:
- EP-A- 1 145 628
- EP-A- 1 886 555
- WO-A-2005/096808
- DE-A1- 3 623 816
- US-A1- 2005 224 003
- US-A1- 2007 125 306

## Description

### FIELD OF THE INVENTION

The invention encompasses an automated animal feeding system, an automated process for feeding an animal and apparatus therefore. The invention also encompasses methods of behavioral modification of animals.

### BACKGROUND TO THE INVENTION

Various systems for automated animal management have been devised. For example, in the livestock industry there is a need to manage efficiently large herds of cattle, sheep and the like to ensure that the animals are properly fed and free from disease. Automated systems to achieve these goals have been devised in which individual animals are tagged so that they may be tracked using an animal identification system. In this way, individual animals may be identified and their key characteristics monitored to ensure that they are in the best condition for shipment and ultimate slaughter.

In the technical field of food research, animals may be subjected to taste testing protocols in which they are required to have access to one or more foods in quantities more than sufficient to maintain normal body weight. Animals such as dogs, given a choice of multiple foods in large quantities, will consume more food than required to maintain their healthy body weight and consequently over time become overweight or obese. Limitation of total food availability is required to avoid this. However, taste testing such as preference testing would be invalidated if the total food availability were limited. Means are therefore required to provide accurate and valid food research protocols for animals. It is important that the protocols are capable of controlling food access to the animals in a safe and reliable way.

US 2005/0224003 describes a method and apparatus for feeding and training an animal using positive reinforcement techniques.

### SUMMARY OF THE INVENTION

The invention encompasses an automated means of interacting with an animal for the purpose of feeding, data collection, behavior modification, and training without human intervention. In certain embodiments, the invention encompasses a method of safely managing the interface between machine and animals in an automated feeding and data collection system. Automation enables the achievement of a high level of accuracy together with the ability to monitor and control food access.

In a first aspect, the present invention specifically provides: an automated animal feeding system, which comprises at least one food container and system components comprising: (a) an animal identification system for identifying an animal which is using the feeding system; (b) a detector for detecting the presence of an animal positioned near the at least one food container; and (c) a barrier for controlling access to the at least one food container; (d) a cueing device for providing a cue to the animal using the feeding system to leave the at least one food container; (e) a stimulus device for supplying a stimulus to the animal positioned near the at least one food container, wherein the system components are controlled by a controller, wherein the barrier is deployable for preventing access to the at least one food container following the transmittal of a cue and optionally a stimulus, and the system is capable of monitoring the position of the animal by means of the detector prior to deploying the barrier, such that the barrier is not deployed when the animal is positioned near the at least one food container. The at least one food container and system components may be conveniently integrated in a feeding station.

In a second aspect, the invention provides an automated process for feeding an animal, which process comprises: (a) providing at least one food container; (b) providing animal food in the at least one food container; (c) providing a barrier for preventing access to the food by the animal; (d) providing a cue to the animal to leave the at least one food container; (e) detecting whether the animal is near the at least one food container; if not, (i) deploying the barrier to prevent access to the food; if so, (ii) addressing the animal by supplying a stimulus and repeating step (e) until the animal is not near the at least one food container; wherein step (e) is controlled by a controller.

In a third aspect, the present invention provides a use of an animal feeding system as defined herein in affecting behavioural modification of a non-human animal.

In a fourth aspect, the present invention provides a use of an animal feeding system as defined herein, in modifying the behaviour of a non-human animal.

### BRIEF DESCRIPTION OF THE DRAWINGS

Figure 1 shows a block diagram of a control system for an automated feeding system according to the invention; and
Figure **2** shows a flow diagram of the process for feeding an animal in accordance with the present invention.

### DETAILED DESCRIPTION OF THE INVENTION

### General Description of the Invention

The invention encompasses an automated animal feeding system, which comprises at least one food container and system components comprising:
(a) an animal identification system for identifying an animal which is using the feeding system;
(b) a detector for detecting the presence of an animal positioned near the at least one food container; and
(c) a barrier for controlling access to the at least one food container;
(d) a cueing device for providing a cue to the animal using the feeding system to leave the at least one food container;
(e) a stimulus device for supplying a stimulus to the animal positioned near the at least one food container, wherein the system components are controlled by a controller, wherein the barrier is deployable for preventing access to the at least one food container following the transmittal of a cue and optionally a stimulus, and the system is capable of monitoring the position of the animal by means of the detector prior to deploying the barrier, such that the barrier is not deployed when the animal is positioned near the at least one food container.

In certain embodiments, the invention encompasses an automated animal feeding system, wherein the at least one food container and system components is integrated in a feeding station.

In certain embodiments, the invention encompasses, the animal identification system comprises a unique tag carried by the animal and a tag reader, which communicates with the controller.

In certain embodiments, the invention encompasses the unique tag is a radio frequency identification chip and the tag reader is a chip reader.

In certain embodiments, the system further comprises a device for measuring a parameter of the animal at the at least one food container. Optionally, the parameter of the animal at the at least one food container relates to the amount of food consumed by the animal.

In certain embodiments, the parameter which relates to the amount of food consumed is measured by measuring the weight of the food in the at least one container.

In certain embodiments, the parameter relates to the amount of food consumed by the animal comprises the calorific value of the food consumed.

In certain embodiments, the invention encompasses a controller configured to calculate the calorific value of the food consumed.

In certain embodiments, the invention encompasses a barrier including an access door to the at least one food container.

In certain embodiments, the invention encompasses a plurality of food containers for providing different foods.

In certain embodiments, the invention encompasses a cueing device which emits an audible cue.

In certain embodiments, the invention encompasses a detector for detecting the presence of an animal including an optical sensor.

In certain embodiments, the invention encompasses a stimulus device comprising an air puff generator.

In certain embodiments, the invention encompasses an automated animal feeding system, wherein the controller comprises a processor programmed with data relating to animal identification, food intake allowance, food identification, food amount, food container identification, food container tare weight, food container position, meal duration time or combinations thereof.

In another embodiment, the invention provides an automated process for feeding an animal, which process comprises: (a) providing at least one food container; (b) providing animal food in the at least one food container; (c) providing a barrier for preventing access to the food by the animal; (d) providing a cue to the animal to leave the at least one food container; (e) detecting whether the animal is near the at least one food container; if not, (i) deploying the barrier to prevent access to the food; if so, (ii) addressing the animal by supplying a stimulus and repeating step (e) until the animal is not near the at least one food container; wherein step (e) is controlled by a controller. The process of the invention may further comprise identifying an animal attending the at least one food container and measuring a parameter of the animal at the at least one container.

In certain embodiments, the invention encompasses an automated feeding device, wherein the at least one food container and system components are integrated in a feeding station.

In certain embodiments, the invention encompasses an automated feeding device, wherein the steps of identifying the animal attending the at least one food container employs an animal identification system which comprises a unique tag carried by the animal and a tag reader which communicates with the controller.

In certain embodiments, the invention encompasses an automated feeding device, wherein the unique tag is a radio frequency identification chip and the tag reader is a chip reader.

In certain embodiments, the invention encompasses an automated feeding device, wherein the parameter of the animal at the at least one food container relates to the amount of food consumed by the animal.

In certain embodiments, the invention encompasses an automated feeding device, wherein the amount of food consumed is measured by measuring the weight of the food in the at least one container.

In certain embodiments, the invention encompasses an automated feeding device, wherein the parameter, which relates to the amount of food consumed by the animal comprises the calorific value of the food consumed.

In certain embodiments, the invention encompasses an automated feeding device, wherein the controller is configured to calculate the calorific value of the food consumed.

In certain embodiments, the invention encompasses an automated feeding device, wherein the barrier comprises an access door to the at least one food container.

In certain embodiments, the invention encompasses an automated feeding device, wherein the at least one food container is a plurality of food containers for providing different foods.

In certain embodiments, the invention encompasses an automated feeding device, wherein the cue is an audible cue,

In certain embodiments, the invention encompasses an automated feeding device, wherein the detector for detecting the presence of an animal comprises an optical sensor.

In certain embodiments, the invention encompasses an automated feeding device, wherein the stimulus is an air puff blown at the animal.

In certain embodiments, the invention encompasses an automated feeding device, wherein the controller comprises a processor programmed with data relating to animal identification, food intake allowance, food identification, food amount, food container identification, food container tare weight, food container position, meal duration time or combinations thereof.

In certain embodiments, the invention encompasses an automated feeding device, wherein the animal is a dog.

In certain embodiments, the invention encompasses an automated feeding device including a controller, which is programmed to operate an automated process for feeding an animal according to any one of claims 8 to 13.

In another aspect, the description encompasses an animal feeding system for affecting behavioral modification of a non-human animal comprising:
(a) an animal identification system for identifying an animal, which is using the feeding system;
(b) a barrier for preventing access to the at least one food container;
(d) a cueing device for providing a cue to the animal using the feeding system to perform a certain action;
(e) a detector for detecting whether the animal using the feeding system has performed a certain action; and
(f) a stimulus device for supplying a stimulus to the animal positioned near the at least one food container;
wherein the system components are controlled by a controller. The invention may further comprise a device for measuring a parameter of the animal at the at least one food container.

In certain aspects, the description encompasses an animal feeding device, wherein the at least one food container and system components are integrated in a feeding station,

In certain aspects, the description encompasses an animal feeding device, wherein the animal identification system comprises a unique tag carried by the animal and a tag reader, which communicates with the controller.

In certain aspects, the description encompasses an animal feeding device, wherein the unique tag is a radio frequency identification chip and the tag reader is a chip reader.

In certain aspects, the description encompasses an animal feeding device, wherein the parameter of the animal at the at least one food container relates to the amount of food consumed by the animal.

In certain aspects, the description encompasses an animal feeding device, wherein the device for measuring the parameter which relates to the amount of food consumed measures the weight of the food in the at least one container.

In certain aspects, the description encompasses an animal feeding device, wherein the parameter, which relates to the amount of food consumed by the animal comprises the calorific value of the food consumed.

In certain aspects, the description encompasses an animal feeding device, wherein the controller is configured to calculate the calorific value of the food consumed.

In certain aspects, the description encompasses an animal feeding device, wherein the barrier comprises an access door to the at least one food container.

In certain aspects, the description encompasses an animal feeding device, wherein the at least one food container is a plurality of food containers for providing different foods.

In certain aspects, the description encompasses an animal feeding device, wherein the cueing device emits an audible cue.

In certain aspects, the description encompasses an animal feeding device, wherein the detector for detecting the presence of an animal comprises an optical sensor.

In certain aspects, the description encompasses an animal feeding device, wherein the stimulus device comprises an air puff generator.

In certain aspects, the description encompasses an animal feeding device, wherein the controller comprises a processor programmed with data relating to animal identification, food intake allowance, food identification, food amount, food container identification, food container tare weight, food container position, meal duration time or combinations thereof.

In another aspect, the description encompasses a method of modifying the behavior of a non-human animal comprising:
(a) identifying an animal subject for behavioral modification using an animal identification system associated with a feed container,
(b) providing a cue to the animal using the feeding system to perform a certain action; and
(c) detecting whether the animal using the feeding system has performed the certain action;
wherein the system components are controlled by a controller. The invention may further comprise measuring a parameter of the animal at the at least one food container and supplying a stimulus to the animal positioned near the at least one food container (i) to cause the animal using the feeding system to perform a certain action or (ii) once the certain action is performed.

In certain aspects, the description encompasses a method of modifying the behavior of a non-human animal, wherein the at least one food container and system components are integrated in a feeding station.

In certain aspects, the description encompasses a method of modifying the behavior of a non-human animal, wherein the animal identification system comprises a unique tag carried by the animal and a tag reader, which communicates with the controller.

In certain aspects, the description encompasses a method of modifying the behavior of a non-human animal, wherein the unique tag is a radio frequency identification chip and the tag reader is a chip reader.

In certain aspects, the description encompasses a method of modifying the behavior of a non-human animal, wherein the parameter of the animal at the at least one food container relates to the amount of food consumed by the animal.

In certain aspects, the description encompasses a method of modifying the behavior of a non-human animal, wherein the device for measuring the parameter which relates to the amount of food consumed measures the weight of the food in the at least one container.

In certain aspects, the description encompasses a method of modifying the behavior of a non-human animal, wherein the parameter which relates to the amount of food consumed by the animal comprises the calorific value of the food consumed.

In certain aspects, the description encompasses a method of modifying the behavior of a non-human animal, wherein the controller is configured to calculate the calorific value of the food consumed.

In certain aspects, the description encompasses a method of modifying the behavior of a non-human animal, wherein the barrier comprises an access door to the at least one food container.

In certain aspects, the description encompasses a method of modifying the behavior of a non-human animal, wherein the at least one food container is a plurality of food containers for providing different foods.

In certain aspects, the description encompasses a method of modifying the behavior of a non-human animal, wherein the cueing device emits an audible cue.

In certain aspects, the description encompasses a method of modifying the behavior of a non-human animal, wherein the detector for detecting the presence of an animal comprises an optical sensor.

In certain aspects, the description encompasses a method of modifying the behavior of a non-human animal, wherein the stimulus device comprises an air puff generator.

In certain aspects, the description encompasses a method of modifying the behavior of a non-human animal, wherein the controller comprises a processor programmed with data relating to animal identification, food intake allowance, food identification, food amount, food container identification, food container tare weight, food container position, meal duration time or combinations thereof.

### The Feeding Station of the Invention

The invention encompasses an automated animal feeding system, which comprises at least one food container and system components comprising: (a) an animal identification system for identifying an animal which is using the feeding system; (b) a detector for detecting the presence of an animal positioned near the at least one food container; and (c) a barrier for controlling access to the at least one food container; (d) a cueing device for providing a cue to the animal using the feeding system to leave the at least one food container; (e) a stimulus device for supplying a stimulus to the animal positioned near the at least one food container, wherein the system components are controlled by a controller, wherein the barrier is deployable for preventing access to the at least one food container following the transmittal of a cue and optionally a stimulus, and the system is capable of monitoring the position of the animal by means of the detector prior to deploying the barrier, such that the barrier is not deployed when the animal is positioned near the at least one food container. The invention may further comprise a device for measuring a parameter of the animal at the at least one food container.

In certain embodiments, the automated feeding system according to the invention encompasses a barrier, which is deployed following a cue transmitted to the animal to enable the animal to leave the at least one food container at a point determined by a parameter of the animal at the food container, such as a predetermined amount of food consumed or a predetermined time of attendance. In other embodiments, a combination of the cue and, where necessary, the stimulus, ensures that the animal is not injured when the barrier is deployed. In this way, animal safety and well-being is ensured while maintaining close tolerance on food intake.

The automated animal feeding system of the invention is designed to gather information, process, and provide feedback for each individual animal based on preset instructions for that individual and in response to its behavior. An animal identification system is provided for identifying the animal, which is used with the feeding system. The animal identification system typically includes a unique tag carried by the animal and a tag reader, which communicates with a controller. In certain embodiments, the tag is carried by the animal as part of its apparel on, for example, a collar. The tag may alternatively be attached to the body of the animal directly or carried inside the body, for example as a subcutaneous insert as is sometimes used for permanent identification of cats and dogs. In certain embodiments, the tag is a radiofrequency identification (RFID) chip, and the tag reader is a chip reader although other tags including any RFID tag that may be affixed to an animal may be used. In certain embodiments, the tag reader is typically positioned in the vicinity of the at least one food container where the at least one food container forms part of a feeding station. In certain embodiments, the tag reader is positioned in the feeding station at a point where the animal passes to gain access to the at least one food container. In certain embodiments, the tag reader is portable, hand operated, or stationary automatic reader type, positioned at the point the animal gains access to food. In certain embodiments, the tag reader is configured to communicate with the controller. Such communication may be wired or wireless communication in a conventional manner.

The animal feeding system of the invention may include a single food container, which is typically of any conventional type such as a standard food bowl. In certain embodiments, the feeding system includes a plurality of food containers. In certain embodiments, the plurality of food containers may be used to provide different foods to the animal to provide a choice. In certain embodiments, access to multiple foods allows for taste testing and other food research protocols. In certain embodiments, the use of a plurality of food containers according to the present invention enables accurate food consumption data to be acquired.

In other embodiments, the invention encompasses a device for measuring a parameter of the animal of that at least one food container. This parameter typically relates to the amount of food consumed by the animal and may be the weight of the food consumed and/or the amount of time, which the animal spends in attendance at the at least one food container. Accordingly, the device for measuring the parameter may comprise a balance and/or a timer. It is possible to use a balance to measure the weight of the animal before and after feeding to calculate the weight of food consumed. Weighing the animal *in situ* can be difficult and inaccurate. Therefore, in certain embodiments, the weight of the at least one food container is determined to determine the weight of food consumed. Where there is a plurality of food containers in, for example, a taste testing protocol, the weight of each individual container is measured because this will give information about the individual food preferences of the animal. In other embodiments, the measurement of the weight of each food container is performed on a continuous basis.

In other embodiments, a device for measuring the parameter of the animal at the at least one food container is configured to communicate with a controller. In the case where the food containers are being weighed for example, on a continuous basis, communication with the controller enables the system to calculate the calorific value of the food consumed from any individual container. In certain embodiments, the system may perform a summing calculation where there is a plurality of food containers to calculate the aggregate calorific value of the food consumed. In certain embodiments, this parameter may be compared to a predetermined level. Such a predetermined level may be stored in the system for reference against the electronic identification of the animal, for example, stored in a Programmable Logic Controller (PLC) memory.

In certain embodiments, a controller may be programmed to deploy the barrier for preventing access to the at least one food container once the predetermined level is reached, subject to the intermediate steps of providing a cue and ensuring that the animal is not near to the at least one food container as described herein. The barrier is preferably an access door positioned to prevent access to an individual food container or a plurality of food containers. In one embodiment, the barrier includes a plurality of access doors, each individual door preventing access to an individual food container or, in other arrangements, to more than one food container. In certain embodiments, the barriers may be operated in a conventional manner. In certain embodiments, each food access door may typically be provided with a pneumatic cylinder actuator and be configured to be in communication with the controller in a conventional wired or wireless manner. Typically, when the predetermined level is reached for the calorific value of food consumed, weight of food consumed or other parameter, the controller communicates with the cueing device, detector and barrier to prevent access to the food containers by the animal.

Before the barrier is deployed a cue is provided to the animal to leave the at least one food container. In certain embodiments, the cue is an audible cue such as an audible tone or buzzer sound. In other embodiments, this may be provided by a tone generator connected to a loudspeaker positioned in the vicinity of the at least one food container. In certain embodiments, the cue may be given in other forms provided that these also influence one or more of the animal's senses. In certain embodiments, the cue may be a tactile, visual, olefactory or a taste cue, for example, an air puff, strobe light, light source, mechanical arm, aroma or scent released near animal, as well as the auditory cue.

The purpose of the cue is to provide a signal to the animal to perform the desired action of leaving the at least one food container, for example by simply backing away. This is a pattern of behavior, which the animal may have to learn by repeated exposure to the feeding system. According to the invention, a detector for detecting the presence of the animal near the at least one food container is provided. In certain embodiments, the detector is configured to be in communication with the controller. In certain embodiments, the detector may be any conventional detector capable of sensing the position of an animal. In certain embodiments, the detector includes an optical sensor. In certain embodiments, the optical sensor may be any suitable sensor such as an emitter-receiver combination in which the emitter emits an optical beam detected by the detector provided that the beam path is not broken. In certain embodiments, the animal is in position near the at least one food container, the path is broken. Only when the animal has moved away from the at least one food container does the beam detector detect the beam. In certain embodiments, the optical beam may be of any standard wavelength including visible and non-visible wavelengths of light.

In certain embodiments, a stimulus device is provided for supplying a stimulus to the animal in the situation where the cue has been provided to the animal to perform an action (*e.g.,* to leave the feeding station) and yet the detector still detects that the animal is positioned near or at the food container. In certain embodiments, the purpose of the stimulus device is to provide pressure to the animal to encourage the action of leaving the at least one food container. In one embodiment, the stimulus includes an air puff blown at the animal. In this arrangement, an air puff generator is positioned in the vicinity of the at least one food container and aimed at the face of the animal or the top of the head of the animal. The stimulus device is configured to communicate with the controller and may do so in conventional manner by wires or wirelessly. It is possible to configure the system so that the frequency, duration, intensity and type of stimulus can be varied or combined to achieve the desired response. For example, the intensity of an air puff can be increased to encourage the animal to back away from the food container if the detector continues to detect the presence of the animal there. Other types of stimulus include, but are not limited to for example, intense strobe light, mechanical door, water jet, loud sounds, or pungent odors.

In one illustrative embodiment of the operation of the invention, once the food consumption of the animal has reached a predetermined level, the system recognizes, via the controller, that the barrier must be deployed to prevent access to the food. In order to do so safely by avoiding contact between the animal and moving parts, which may lead to injury, a cue is provided to the animal that it should back away from the at least one food container. The system monitors whether the animal has responded to the cue by means of the detector. If the detector senses that the animal has moved and is therefore not near the food container, the barrier is deployed. If, however, the detector registers that the animal is still positioned near the at least one food container, thereby risking injury were the barrier were to be deployed, the stimulus is supplied to the animal. If the animal has now moved away from the at least one food container the detector will detect this and the barrier may be deployed. If the animal has still failed to move away from the at least one food container, the stimulus may be repeated, possibly more intensely.

In an illustrative embodiment, should the animal try to gain access to the at least one food container during deployment of the barrier, barrier deployment may be halted and the stimulus reactivated until the animal again leaves the at least one food container.

In addition to direct measurements of food intake, the system can also gather information in relation to individual animals including physiologic data and behavior, for example, body temperature from commercially available RFID chips, behavior: how fast they eat, how many times they approach each bowl.

By combining the cue and some other form of feedback, for example, a reward *(i.e.*, food) or pressure correctly, an animal may be automatically trained to perform some action in response to a specific cue. For example, an animal backing away from the food bowl in the feeder is an example of the application of this principle. Another example would be the use of different auditory cues to signal dogs to go to the feeding room or to go outside depending on the desired action.

### Methods of Behavioral Modification of a Non-Human Animal

The description also encompasses a method of modifying, regulating, or controlling the behavior of an animal. The method is applicable to any non-human animal. In certain aspects, the method is applicable to animals that are capable of learning to recognize the significance of a cue. In certain embodiments, the animal is a dog.

As used herein and unless otherwise indicated, "behavior modification" refers to changing or altering the behavior of an animal for example, a cat or dog, through changing the animal's attitude, perception, or cognizance of a certain act. Training (as in obedience training) teaches a specific behavior action (such as learning to sit). In the context of the present invention, the tenn "behavior modification" refers to causing an animal to act in a certain manner, for example, sitting, as a result of a certain stimuli, for example, feeding.

Accordingly, the description encompasses a method of behavioral modification of an animal. In certain aspects, the feeding system of the invention includes application of the following principles for behavioral modification: a cue or signal to perform a desired action; encouragement to perform that action; ability to monitor if correct action is undertaken; rapid removal of pressure when correct action is taken; and re-application of pressure if incorrect action is taken.

In certain aspects of the description, the feeding system of the invention is an example of an automated animal behavioral modification apparatus. This system provides a cue to the animal for example a dog or cat and can monitor if the animal has taken the correct action. It also has the capability of "teaching" the animal, which action should be taken by directing its position with the stimulus *(e.g.,* air puff). When exposed to the feeding system most animals learn very quickly *(e.g.,* within 1 week) to respond to the cue alone *(i.e.,* the air puff is no longer needed to force the animal to back away from the food bowl). At this point, the animal is considered to be trained. This same principle can be applied to other situations as well. One example would be to use a similar apparatus to cause animals to exit their living enclosures in response to a specific signal or to come in from outside in response to another specific signal.

### Operation/Sequence of Events for an Illustrative Embodiment

Feeding session set up data are entered into the controller Feeding session set up data is entered and stored in a database. When a feeding session is started, the controller downloads the feeding session data for each animal in the session. The downloaded data is stored and used in the Programmable Logic Controller (PLC) during the feeding session. After completion of the feeding session, the session results data is sent to the database for long-term storage. These data include animal identification, food intake allowance, food identification, food amount, bowl identification, bowl tare weight, bowl position and meal duration time.

In the feeding process, the operator loads dogs into the feeding station, identifies the feeding booth and dogs, identifies and loads food bowls and then the feeding process begins after verification of the feeding information (animal identification, food identification, number of food offerings, food amount(s), bowl identification(s) and bowl position).

The end of meal exit sequence of events is as follows:
1) Initiates when meal allowance is reached (amount of intake or time)
2) Apply cue signal to exit and back away from food bowl (tone)
3) Apply pressure (air puff) if animal does not respond (presence detected) to cue
4) Release pressure when animal response (no response) is detected, and if no response is detected then increase pressure level over time
5) Close food access door if no animal is present
6) If animal presence is detected during door closing, reopen door and go back to event 3

### System Composition

1) Monitoring instrumentation (light array, load cells, RFID reader)
2) Programmable Logic Controller with electronic signal interface modules (input/output)
3) integration software (Human Machine Interface and Programmable Logic Control)
4) Deviceslmechanisms that interact with the animal - food access door with pneumatic cylinder actuator, audio tone generator and pneumatic control system with air puff nozzles
5) IT Hardware (PC, bar code scanner, Local Area Network Ethernet switch); and
6) Enclosures for hardware, instrumentation, food bowls and the animal.

### EXAMPLES

### Feeding System

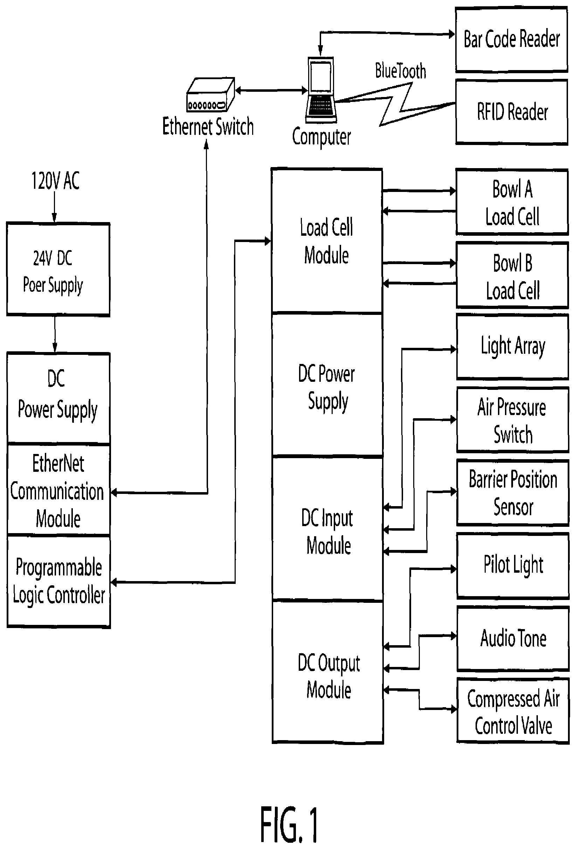

In an exemplary embodiment of the invention, a canine feeding system is described with reference to Figure 1, which shows a block diagram of the control system. A computer provides the human interface to the automated feeding system for feeding session set up and monitoring. Electronic input of dog and bowl identification information is provided to the computer by a bar code reader and an RFID reader. The RFID reader may be linked to the computer by a Bluetooth link. The computer is linked to the rest of the feeding system by an ethernet switch and ethernet communication module. A programmable logic controller is connected to the ethernet communication module and monitors all inputs, processes or data, and provides all appropriate outputs to the feeding system components. The programmable logic controller is linked to communcate with a load cell module, DC input module and DC output module.

Bowl load cells depicted as bowl A load cell and bowl B load cell measure food weight and changes in food weight as a dog eats. This provides information on real time food intake. A barrier position sensor communicates with the DC input module and provides information to the system on the position of the barrier door, which may be open or closed. An air pressure switch also communicates with the DC input module. This switch monitors the air pressure available to the system to open and close the barrier door or to provide the air puff stimulus to the dog. A light array communicates with the DC input module and senses the presence of any object in the path of the barrier door. In this way, the presence of the dog may be detected. A compressed air control valve is provided which communicates with the DC output module. This valve is used to actuate the pneumatic cylinder to open or close the barrier door. Another compressed air valve (not shown in the diagram) is used to provide the air puff stimulus to cause the dog to back away from the food bowls to allow the barrier door to close safely. The audio tone communicates with the DC output module. The audio tone provides a cue to the dog that its meal is over and it should back away from the bowls. The pilot light also communicates with the DC output module. This provides information to the operator on the status of each individual feeding station.

### Operation of Feeding System

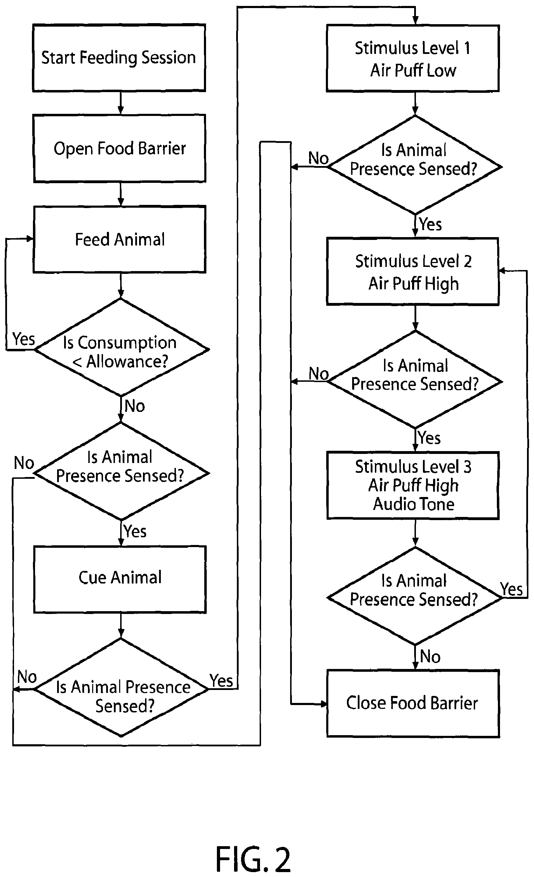

There is now described the operation and sequence of events in the canine feeding system described above. A flow diagram of the basic steps is set out in Figure 2.

### Feeding session setup:

The operator enters feeding session setup information (animal ID, Food ID, food intake allowance, food offering amount, bowl ID, bowl position, and meal duration).

### Feeding session initiation:

Once each dog is loaded in its individual feeding booth the electronic ID for the dog and the feeding booth are captured by a RFID scanner and transmitted to the feeding system. The system then identifies for the operator which bowls go in each position for each feeder. Once the system has verified the feeding information (animal ID, food ID, food amounts, bowl ID, and bowl position) the feeding session can begin.

### Feeding session:

The feeding session begins when the system opens the food barrier door and allows the dog access to the food(s). During the feeding session, the system continuously monitors the weight of each food bowl and calculates the dog's intake of each food and the total food consumed. The dog is allowed access to all food bowls as long as its total food intake is less than its preset daily allowance. When the dog has consumed its daily food allowance or allowed meal time the system initiates the feeding session germination sequence.

### Feeding session termination sequence:

When the dog has reached its meal allowance (food intake or time) the system checks for its presence at the food bowls as indicated by the light array. If the dog is not present in the path of the barrier door, the system closes the food barrier door. If the dog is present, it receives a cue in the form of an audio tone from the system to indicate it should back away from the food bowls. If the dog backs out of the light array, the system closes the food barrier door.

If the dog remains in the path of the barrier door it receives the level 1 air puff stimulus to encourage it to back away from the food bowls. If the dog backs out of the light array the system closes the food barrier door. If not, the level of intensity of the air puff is increased (level 2 and level 3) until the dog backs out of the path of the barrier door and the system can safely block its access to the food. Once the food barrier door is in the closed position the system notifies the operator that the dog's meal is over and it can be removed from the feeding booth.

### Automated animal training:

Because this system has the ability to monitor the presence of a dog at the food bowls and provides a consistent cue to move away from the food bowls coupled with a graded stimulus to encourage such movement most dogs learn very quickly to take the desired action in response to the cue alone.

### Canine Feeding Example

A prototype feeding system has been used to feed more than 40 dogs. All dogs adapted to the meal termination sequence relatively quickly with no safety issues. The system is also highly effective in limiting food intake. Table 1 shows feeding results for 4 dogs for 6 days each. Dogs were allowed to choose between two different foods. The offering amount of each food was enough to maintain each dog's body weight, however, on days 1 thru 5 each dog's total food intake was limited by the system to its daily allowance. On day 6, each dog was unlimited for comparison purposes.

**Table 1 - Daily Food Consumption**

| Dog ID | Day | Food Offering (grams) | Food Allowance (grams) | Food Eaten (grams) | Time Allowance (min) | Time Used (min) |
|---|---|---|---|---|---|---|
| Dale | 1 | 480 | 240 | 242 | 45 | 3 |
| Dale | 2 | 503 | 240 | 246 | 45 | 2 |
| Dale | 3 | 506 | 240 | 244 | 45 | 3 |
| Dale | 4 | 505 | 240 | 247 | 45 | 3 |
| Dale | 5 | 510 | 240 | 246 | 45 | 2 |
| Dale | 6 | 480 | Unlimited | 480 | 45 | |
| | | | | | | |
| Flash | 1 | 485 | 240 | 244 | 45 | 4 |
| Flash | 2 | 469 | 220 | 222 | 45 | 3 |
| Flash | 3 | 464 | 220 | 222 | 45 | 3 |
| Flash | 4 | 458 | 220 | 224 | 45 | 3 |
| Flash | 5 | 469 | 220 | 221 | 45 | 4 |
| Flash | 6 | 440 | Unlimited | 440 | 45 | |
| | | | | | | |
| Java | 1 | 473 | 240 | 244 | 45 | 4 |
| Java | 2 | 488 | 240 | 244 | 45 | 4 |
| Java | 3 | 505 | 240 | 254 | 45 | 5 |
| Java | 4 | 509 | 240 | 250 | 45 | 4 |
| Java | 5 | 510 | 240 | 242 | 45 | 4 |
| Java | 6 | 480 | Unlimited | 363 | 45 | |
| | | | | | | |
| Swanson | 1 | 504 | 250 | 266 | 45 | 2 |
| Swanson | 2 | 553 | 250 | 256 | 45 | 2 |
| Swanson | 3 | 532 | 250 | 253 | 45 | 2 |
| Swanson | 4 | 526 | 250 | 262 | 45 | 2 |
| Swanson | 5 | 529 | 250 | 251 | 45 | 2 |
| Swanson | 6 | 500 | Unlimited | 500 | 45 | |

It will be apparent from the data set out in Table 1 that the use of the canine feeding system enabled each dog to be fed a controlled amount of food corresponding approximately to their food allowance. Where each dog was allowed an unlimited amount of food, the data show that most or all of the food offered was consumed by the dog, in excess of their daily allowance.

## Claims

1. An automated animal feeding system, which comprises at least one food container and system components comprising:
(a) an animal identification system for identifying an animal which is using the feeding system;
(b) a detector for detecting the presence of an animal positioned near the at least one food container; and
(c) a barrier for controlling access to the at least one food container;
(d) a cueing device for providing a cue to the animal using the feeding system to leave the at least one food container;
(e) a stimulus device for supplying a stimulus to the animal positioned near the at least one food container
wherein the system components are controlled by a controller, **characterised in that** the barrier is deployable for preventing access to the at least one food container following the transmittal of a cue and optionally a stimulus, and the system is capable of monitoring the position of the animal by means of the detector prior to deploying the barrier, such that the barrier is not deployed when the animal is positioned near the at least one food container.

2. An automated animal feeding system according to claim 1, further comprising a device for measuring a parameter of the animal at the at least one food container, wherein the parameter is optionally an identification of the animal.

3. An automated animal feeding system according to claim 2, wherein the parameter of the animal at the at least one food container relates to the amount of food consumed by the animal, and optionally,
wherein the device for measuring the parameter which relates to the amount of food consumed measures the weight of the food in the at least one container, and/or,
wherein the parameter which relates to the amount of food consumed by the animal comprises the calorific value of the food consumed, and wherein preferably the controller isconfigured to calculate the calorific value of the food consumed.

4. An automated animal feeding system according to claim 2 or 3, wherein the device for measuring a parameter of the animal at the at least one food container is the same as the detector for detecting the presence of an animal positioned near the at least one food container.

5. An automated animal feeding system according to any of claims 2 to 4, wherein the cueing device is activated when the parameter of the animal at the at least one food container is achieved, and optionally, wherein the cueing device emits an audible cue.

6. An automated animal feeding system according to any preceding claim,
wherein the at least one food container and system components are integrated in a feeding station, and optionally,
wherein the animal identification system comprises a unique tag carried by the animal and a tag reader which communicates with the controller, and wherein preferably, the unique tag is a radio frequency identification chip and the tag reader is a chip reader.

7. An automated animal feeding system according to any preceding claim,
wherein the barrier comprises an access door to the at least one food container, and/or
wherein the at least one food container is a plurality of food containers for providing different foods, and/or
wherein the detector for detecting the presence of an animal comprises an optical sensor, and/or
wherein the stimulus device comprises an air puff generator, and/or
wherein the controller comprises a processor programmed with data relating to animal identification, food intake allowance, food identification, food amount, food container identification, food container tare weight, food container position, meal duration time or combinations thereof.

8. An automated process for feeding an animal, which process comprises:
(a) providing at least one food container;
(b) providing animal food in the at least one food container;
(c) providing a barrier for preventing access to the food by the animal; **characterised in that** the process further comprises:
(d) providing a cue to the animal to leave the at least one food container;
(e) detecting whether the animal is near the at least one food container;
if not, (i) deploying the barrier to prevent access to the food;
if so, (ii) addressing the animal by supplying a stimulus and repeating step (e) until the animal is not near the at least one food container; wherein step (e) is controlled by a controller.

9. An automated process for feeding an animal according to claim 8, further comprising identifying an animal attending the at least one food container, and optionally,
providing a cue to the animal to leave the at least one food container, wherein preferably the cue is an audible cue, and/or
measuring a parameter of the animal at the at least one food container, wherein the parameter is optionally an identification of the animal.

10. An automated process for feeding an animal according to claim 9 wherein the identifying the animal attending the at least one food container employs an animal identification system which comprises a unique tag carried by the animal and a tag reader which communicates with the controller,
wherein preferably the unique tag is a radio frequency identification chip and the tag reader is a chip reader.

11. An automated process for feeding an animal according claim 9 or claim 10, wherein the parameter of the animal at the at least one food container relates to the amount of food consumed by the animal, and optionally,
wherein the device for measuring the parameter which relates to the amount of food consumed measures the weight of the food in the at least one container, and/or,
wherein the parameter which relates to the amount of food consumed by the animal comprises the calorific value of the food consumed, wherein preferably, the controller is configured to calculate the calorific value of the food consumed.

12. An automated process for feeding an animal according to any one of claims 9 to 11, wherein the at least one food container and system components are integrated in a feeding station.

13. An automated process for feeding an animal according to any one of claims 9 to 11,
wherein the barrier comprises an access door to the at least one food container, and/or
wherein the at least one food container is a plurality of food containers for providing different foods, and/or
wherein the detector for detecting the presence of an animal comprises an optical sensor, and/or
wherein the stimulus device comprises an air puff generator, and/or
wherein the controller comprises a processor programmed with data relating to animal identification, food intake allowance, food identification, food amount, food container identification, food container tare weight, food container position, meal duration time or combinations thereof.

14. A controller for an automated animal feeding system according to any one of claims 1 to 8, which is programmed to operate an automated process for feeding an animal according to any one of claims 9 to 13.

15. The use of an animal feeding system according to any of claims 1 to 8 in affecting behavioural modification of a non-human animal.

16. The use of an animal feeding system according to any of claims 1 to 8 in modifying the behaviour of a non-human animal.

## Patentansprüche

1. Automatisiertes Tierfütterungssystem, das mindestens einen Nahrungsbehälter und Folgendes umfassende Systemkomponenten umfasst:
(a) ein Tieridentifikationssystem zum Identifizieren eines Tiers, das das Fütterungssystem benutzt;
(b) einen Detektor zum Erkennen der Anwesenheit eines in der Nähe des mindestens einen Nahrungsbehälters positionierten Tiers; und
(c) eine Sperre zum Beschränken des Zugangs zu dem mindestens einen Nahrungsbehälter;
(d) eine Aufforderungsvorrichtung zum Bereitstellen einer Aufforderung für das das Fütterungssystem benutzende Tier, den mindestens einen Nahrungsbehälter zu verlassen;
(e) eine Reizvorrichtung zum Zuführen eines Reizes zu dem in der Nähe des mindestens einen Nahrungsbehälter positionierten Tiers
wobei die Systemkomponenten von einem Kontroller gesteuert werden, **dadurch gekennzeichnet, dass**
die Sperre einsetzbar ist, um, anschließend an die Übertragung einer Aufforderung und optional eines Reizes, Zugang zu dem mindestens einen Nahrungsbehälter zu verhindern und das System in der Lage ist, vor dem Einsetzen der Sperre die Position des Tiers mittels des Detektors zu überwachen, sodass die Sperre nicht eingesetzt wird, wenn das Tier in der Nähe des mindestens einen Nahrungsbehälters positioniert ist.

2. Automatisiertes Tierfütterungssystem nach Anspruch 1, weiter umfassend eine Vorrichtung zum Messen eines Parameters des Tiers an dem mindestens einen Nahrungsbehälter, wobei es sich bei dem Parameter optional um eine Kennzeichnung des Tiers handelt.

3. Automatisiertes Tierfütterungssystem nach Anspruch 2, wobei der Parameter des Tiers an dem mindestens einen Nahrungsbehälter die Menge der von dem Tier konsumierten Nahrung betrifft, und optional,
wobei die Vorrichtung zum Messen des die Menge der konsumierten Nahrung betreffeneden Parameters das Gewicht der Nahrung in dem mindestens einen Behälter misst, und/oder
wobei der die Menge der von dem Tier konsumierten Nahrung betreffende Parameter den Brennwert der konsumierten Nahrung umfasst, und wobei vorzugsweise der Kontroller dazu konfiguriert ist, den Brennwert der konsumierten Nahrung zu berechnen.

4. Automatisiertes Tierfütterungssystem nach Anspruch 2 oder 3, wobei die Vorrichtung zum Messen eines Parameters des Tiers an dem mindestens einen Nahrungsbehälter dieselbe ist, wie der Detektor zum Erkennen der Anwesenheit eines in der Nähe des mindestens einen Nahrungsbehälters positionierten Tiers.

5. Automatisiertes Tierfütterungssystem nach einem der Ansprüche 2 bis 4, wobei die Aufforderungsvorrichtung aktiviert wird, wenn der Parameter des Tiers an dem mindestens einen Nahrungsbehälter erreicht wird, und optional, wobei die Aufforderungsvorrichtung eine hörbare Aufforderung ausgibt.

6. Automatisiertes Tierfütterungssystem nach einem der vorangehenden Ansprüche,
wobei der mindestens eine Nahrungsbehälter und Systemkomponenten in eine Fütterungsstation integriert sind, und optional,
wobei das Tieridentifikationssystem ein von dem Tier getragenes einzigartiges Etikett und ein Etikettenlesegerät, das mit dem Kontroller kommuniziert, umfasst, und wobei es sich bei dem einzigartigen Etikett vorzugsweise um einen Funkfrequenz-Identifikationschip handelt und es sich bei dem Etikettenlesegerät um ein Chiplesegerät handelt.

7. Automatisiertes Tierfütterungssystem nach einem der vorangehenden Ansprüche,
wobei die Sperre eine Zugangsklappe zu dem mindestens einen Nahrungsbehälter umfasst, und/oder
wobei es sich bei dem mindestens einen Nahrungsbehälter um eine Vielzahl von Nahrungsbehältern zum Bereitstellen verschiedener Nahrungen handelt, und/oder
wobei der Detektor zum Erkennen der Anwesenheit eines Tiers einen optischen Sensor umfasst, und/oder
wobei die Reizvorrichtung einen Luftstoßerzeuger umfasst, und/oder
wobei der Kontroller einen Prozessor umfasst, der mit Daten programmiert ist, die die Tieridentifikation, die Nahrungsaufnahmevorgabe, die Nahrungsidentifikation, die Nahrungsmenge, die Nahrungsbehälteridentifikation, das Nahrungsbehälter-Leergewicht, die Nahrungsbehälterposition, die Mahlzeitdauer oder Kombinationen davon betreffen.

8. Automatisiertes Verfahren zum Füttern eines Tiers, wobei das Verfahren Folgendes umfasst:
(a) Bereitstellen mindestens eines Nahrungsbehälters;
(b) Bereitstellen von Tiernahrung in dem mindestens einen Nahrungsbehälter;
(c) Bereitstellen einer Sperre zum Verhindern des Zugangs zu der Nahrung durch das Tier; **dadurch gekennzeichnet, dass** das Verfahren weiter Folgendes umfasst:
(d) Bereitstellen einer Aufforderung für das Tier, den mindestens einen Nahrungsbehälter zu verlassen;
(e) Erkennen, ob sich das Tier in der Nähe des mindestens einen Nahrungsbehälters befinde,
falls nicht, (i) Einsetzen der Sperre, um den Zugang zur Nahrung zu verhindern;
falls ja, (ii) Ansprechen des Tiers durch Zuführen eines Reizes und Wiederholen von Schritt (e), bis sich das Tier nicht in der Nähe des mindestens einen Nahrungsbehälters befindet; wobei Schritt (e) durch einen Kontroller gesteuert wird.

9. Automatisiertes Verfahren zum Füttern eines Tiers nach Anspruch 8, weiter umfassend das Identifizieren eines Tiers, das den mindestens einen Nahrungsbehälter besucht, und optional
Bereitstellen einer Aufforderung für das Tier, den mindestens einen Nahrungsbehälter zu verlassen, wobei es sich bei der Aufforderung vorzugsweise um eine hörbare Aufforderung handelt, und/oder
Messen eines Parameters des Tiers an dem mindestens einen Nahrungsbehälter, wobei es sich bei dem Parameter optional um eine Kennzeichnung des Tiers handelt.

10. Automatisiertes Verfahren zum Füttern eines Tiers nach Anspruch 9, wobei das Identifizieren des den mindestens einen Nahrungsbehälter besuchenden Tiers ein Tieridentifikationssystem nutzt, das ein von dem Tier getragenes einzigartiges Etikett und ein Etikettenlesegerät, das mit dem Kontroller kommuniziert, umfasst,
wobei es sich bei dem einzigartigen Etikett vorzugsweise um einen Funkfrequenz-Identifikationschip handelt und es sich bei dem Etikettenlesegerät um ein Chiplesegerät handelt.

11. Automatisiertes Verfahren zum Füttern eines Tiers nach Anspruch 9 oder Anspruch 10, wobei der Parameter des Tiers an dem mindestens einen Nahrungsbehälter die Menge der von dem Tier konsumierten Nahrung betrifft, und optional
wobei die Vorrichtung zum Messen des die Menge der konsumierten Nahrung betreffenden Parameters das Gewicht der Nahrung in dem mindestens einen Behälter misst, und/oder
wobei der die Menge der von dem Tier konsumierten Nahrung betreffende Parameter den Brennwert der konsumierten Nahrung umfasst, und wobei vorzugsweise der Kontroller dazu konfiguriert ist, den Brennwert der konsumierten Nahrung zu berechnen.

12. Automatisiertes Verfahren zum Füttern eines Tiers nach einem der Ansprüche 9 bis 11, wobei der mindestens eine Nahrungsbehälter und Systemkomponenten in eine Fütterungsstation integriert sind.

13. Automatisiertes Verfahren zum Füttern eines Tiers nach einem der Ansprüche 9 bis 11,
wobei die Sperre eine Zugangsklappe zu dem mindestens einen Nahrungsbehälter umfasst, und/oder
wobei es sich bei dem mindestens einen Nahrungsbehälter um eine Vielzahl von Nahrungsbehältern zum Bereitstellen verschiedener Nahrungen handelt, und/oder
wobei der Detektor zum Erkennen der Anwesenheit eines Tiers einen optischen Sensor umfasst, und/oder
wobei die Reizvorrichtung einen Luftstoßerzeuger umfasst, und/oder
wobei der Kontroller einen Prozessor umfasst, der mit Daten programmiert ist, die die Tieridentifikation, die Nahrungsaufiiahmevorgabe, die Nahrungsidentifikation, die Nahrungsmenge, die Nahrungsbehälteridentifikation, das Nahrungsbehälter-Leergewicht, die Nahrungsbehälterposition, die Mahlzeitdauer oder Kombinationen davon betreffen.

14. Kontroller für ein automatisiertes Türfütterungssystem nach einem der Ansprüche 1 bis 8, das dazu programmiert ist, ein automatisiertes Verfahren zum Füttern eines Tiers nach einem der Ansprüche 9 bis 13 zu betreiben.

15. Verwendung eines Tierfütterungssystems nach einem der Ansprüche 1 bis 8 zum Beeinflussen von Verhaltensänderung eines nicht menschlichen Tiers.

16. Verwendung eines Tierfütterungssystems nach einem der Ansprüche 1 bis 8 zum Ändern des Verhaltens eines nicht menschlichen Tiers.

## Revendications

1. Système automatisé d'alimentation animale, qui comprend au moins un récipient alimentaire et des éléments du système comprenant :
(a) un système d'identification d'animal pour identifier un animal qui utilise le système d'alimentation ;
(b) un détecteur pour détecter la présence d'un animal positionné près de l'au moins un récipient alimentaire ; et
(c) une barrière pour contrôler l'accès à l'au moins un récipient alimentaire ;
(d) un dispositif de fourniture de signal pour fournir un signal à l'animal utilisant le système d'alimentation luis demandant de quitter l'au moins un récipient alimentaire ;
(e) un dispositif de stimulus pour fournir un stimulus à l'animal positionné près de l'au moins un récipient alimentaire ;
ces éléments du système étant commandés par un appareil de commande, **caractérisé en ce que**
la barrière peut être déployée pour empêcher l'accès à l'au moins un récipient alimentaire après la transmission d'un signal et, facultativement, d'un stimulus, et le système est capable de surveiller la position de l'animal au moyen du détecteur avant le déploiement de la barrière, de manière à ce que la barrière ne soit pas déployée lorsque l'animal est positionné près de l'au moins un récipient alimentaire.

2. Système automatisé d'alimentation animale selon la revendication 1, comprenant en outre un dispositif pour mesurer un paramètre de l'animal au niveau de l'au moins un récipient alimentaire, ce paramètre étant facultativement une identification de l'animal.

3. Système automatisé d'alimentation animale selon la revendication 2, dans lequel le paramètre de l'animal au niveau de l'au moins un récipient alimentaire se rapporte à la quantité d'aliment consommée par l'animal, et, facultativement,
dans lequel le dispositif pour mesurer le paramètre qui se rapporte à la quantité d'aliment consommée mesure le poids de l'aliment dans l'au moins un récipient alimentaire, et/ou,
dans lequel le paramètre qui se rapporte à la quantité d'aliment consommée par l'animal comprend la valeur calorifique de l'aliment consommé, et dans lequel, de préférence, l'appareil de commande est configuré de façon à calculer la valeur calorifique de l'aliment consommé.

4. Système automatisé d'alimentation animale selon la revendication 2 ou 3, dans lequel le dispositif pour mesurer un paramètre de l'animal au niveau de l'au moins un récipient alimentaire est le même que le détecteur pour détecter la présence d'un animal positionné près de l'au moins un récipient alimentaire.

5. Système automatisé d'alimentation animale selon l'une quelconque des revendications 2 à 4, dans lequel le dispositif de fourniture de signal est activé lorsque le paramètre de l'animal au niveau de l'au moins un récipient alimentaire est obtenu, et, facultativement, dans lequel le dispositif de fourniture de signal émet un signal audible.

6. Système automatisé d'alimentation animale selon l'une quelconque des revendications précédentes,
dans lequel l'au moins un récipient alimentaire et les éléments du système sont intégrés dans un poste d'alimentation, et, facultativement,
dans lequel le système d'identification d'animal comprend une étiquette unique portée par l'animal et un lecteur d'étiquette qui communique avec l'appareil de commande, et dans lequel, de préférence, l'étiquette unique est une puce d'identification par radiofréquence et le lecteur d'étiquette est un lecteur de puce.

7. Système automatisé d'alimentation animale selon l'une quelconque des revendications précédentes,
dans lequel la barrière consiste en une porte d'accès à l'au moins un récipient alimentaire, et/ou
dans lequel l'au moins un récipient alimentaire est une pluralité de récipients alimentaires pour fournir différents aliments, et/ou
dans lequel le détecteur pour détecter la présence d'un animal consiste en un capteur optique, et/ou
dans lequel l'appareil de commande consiste en un processeur programmé avec des données se rapportant à l'identification de l'animal, la ration alimentaire attribuée, l'identification de l'aliment, la quantité d'aliment, l'identification du récipient alimentaire, la tare du récipient alimentaire, la position du récipient alimentaire, et la durée de l'alimentation ou à des combinaisons de celles-ci.

8. Processus automatisé pour alimenter un animal, lequel processus comprend :
(a) la fourniture d'au moins un récipient alimentaire ;
(b) la fourniture d'aliment animal dans l'au moins un récipient alimentaire ;
(c) la fourniture d'une barrière pour empêcher l'accès à l'aliment par l'animal ;
**caractérisé en ce que** ce processus comprend en outre :
(d) la fourniture d'un signal à l'animal lui demandant de quitter l'au moins un récipient alimentaire ;
(e) la détection de si l'animal est près de l'au moins un récipient alimentaire ;
si ce n'est pas le cas, (i) le déploiement de la barrière pour empêcher l'accès à l'aliment ;
si c'est le cas, (ii) la signalisation à l'animal en fournissant un stimulus et en répétant l'étape (e) jusqu'à ce que l'animal ne soit pas près de l'au moins un récipient alimentaire ; l'étape (e) étant commandée par un appareil de commande.

9. Processus automatisé pour alimenter un animal selon la revendication 8, comprenant en outre l'identification d'un animal se tenant devant l'au moins un récipient alimentaire, et, facultativement,
la fourniture d'un signal à l'animal lui demandant de quitter l'au moins un récipient alimentaire, ce signal étant de préférence un signal audible, et/ou la mesure d'un paramètre de l'animal au niveau de l'au moins un récipient alimentaire, ce paramètre étant facultativement une identification de l'animal.

10. Processus automatisé pour alimenter un animal selon la revendication 9, dans lequel l'identification de l'animal se tenant devant l'au moins un récipient alimentaire emploie un système d'identification d'animal qui comprend une étiquette unique portée par l'animal et un lecteur d'étiquette qui communique avec l'appareil de commande,
dans lequel, de préférence, l'étiquette unique est une puce d'identification par radiofréquence et le lecteur d'étiquette est un lecteur de puce.

11. Processus automatisé pour alimenter un animal selon la revendication 9 ou la revendication 10, dans lequel le paramètre de l'animal au niveau de l'au moins un récipient alimentaire se rapporte à la quantité d'aliment consommée par l'animal, et, facultativement,
dans lequel le dispositif pour mesurer le paramètre qui se rapporte à la quantité d'aliment consommée mesure le poids de l'aliment dans l'au moins un récipient alimentaire, et/ou
dans lequel le paramètre qui se rapporte à la quantité d'aliment consommée par l'animal comprend la valeur calorifique de l'aliment consommé, dans lequel, de préférence, l'appareil de commande est configuré de façon à calculer la valeur calorifique de l'aliment consommé.

12. Processus automatisé pour alimenter un animal selon l'une quelconque des revendications 9 à 11, dans lequel l'au moins un récipient alimentaire et les éléments du système sont intégrés dans un poste d'alimentation.

13. Processus automatisé pour alimenter un animal selon l'une quelconque des revendications 9 à 11,
dans lequel la barrière consiste en une porte d'accès à l'au moins un récipient alimentaire, et/ou dans lequel l'au moins un récipient alimentaire est une pluralité de récipients alimentaires pour fournir différents aliments, et/ou
dans lequel le détecteur pour détecter la présence d'un animal consiste en un capteur optique, et/ou
dans lequel le dispositif de stimulus consiste en un générateur de bouffée d'air, et/ou dans lequel l'appareil de commande consiste en un processeur programmé avec des données se rapportant à l'identification de l'animal, la ration alimentaire attribuée, l'identification de l'aliment, la quantité d'aliment, l'identification du récipient alimentaire, la tare du récipient alimentaire, la position du récipient alimentaire, et la durée de l'alimentation ou à des combinaisons de celles-ci.

14. Appareil de commande pour un système automatisé d'alimentation animale selon l'une quelconque des revendications 1 à 8, qui est programmé de façon à exécuter un processus automatisé pour alimenter un animal selon l'une quelconque des revendications 9 à 13.

15. Utilisation d'un système d'alimentation animale selon l'une quelconque des revendications 1 à 8 pour encourager la modification du comportement d'un animal non humain.

16. Utilisation d'un système d'alimentation animale selon l'une quelconque des revendications 1 à 8 pour modifier le comportement d'un animal non humain.
